# EUROPEAN PATENT APPLICATION

(11) **EP 4 663 307 A1**
(43) Date of publication of application: **17.12.2025**
(21) Application number: 24901028.1
(22) Date of filing: 03.12.2024
(51) Int. Cl.: B05C 5/02, B05C 1/08, B05C 11/10, H01M 4/04

(54) **DIE COATER, COATING EQUIPMENT COMPRISING SAME, AND METHOD FOR COATING ELECTRODE USING SAME**

(30) Priority: 05.12.2023 KR 20230174268
(71) Applicant: LG Energy Solution, Ltd., Seoul 07335 (KR)
(72) Inventor: PARK, Joon Sun, Daejeon 34122 (KR); CHOI, Min Hyuck, Daejeon 34122 (KR); KIM, Guk Tae, Daejeon 34122 (KR)
(74) Representative: Plasseraud IP
(86) International application number: PCT/KR2024/019603
(87) International publication number: WO 2025/121842

(57) **Abstract**

Disclosed herein relates to a die coater, wherein in the second coater shim forming the second slit through which the insulating liquid is discharged, the length L1 of the first sidewall at a relatively distant position from the first slit is longer than the length L2 of the second sidewall at a relatively close position from the first slit.

## Description

### [Technical Field]

This application claims the benefit of priority from Korean Patent Application No. 10-2023-0174268, filed on Dec. 5, 2023, the disclosures of which are incorporated herein by reference.

The present disclosure relates to a die coater for simultaneously coating an electrode slurry and an insulating liquid, a coating facility including the same, and a method for coating an electrode using the same.

### [Background]

With the technological development and increasing demand for mobile devices, the demand for secondary batteries is also increasing rapidly. Among them, lithium secondary batteries are widely used as an energy source for various mobile devices and other electronic products due to their high energy density, high operating voltage, and excellent preservation and lifetime characteristics.

Lithium secondary batteries utilize an electrode having an active material layer and an insulating layer formed on the surface of a current collector. Such an electrode is manufactured by applying an electrode slurry containing an active material and an insulating liquid containing an insulating material to the surface of the current collector using a coating device such as a die coater and drying it so that some of the edges of the electrode active material layer overlap.

Double-sided electrodes with electrode active material layers disposed on both sides of the current collector are manufactured by a top-coating process in which the electrode slurry and insulating liquid are coated on the first side, the front side of the current collector, followed by a back-coating process in which the electrode slurry and insulating liquid are coated on the second side, the back side of the current collector.

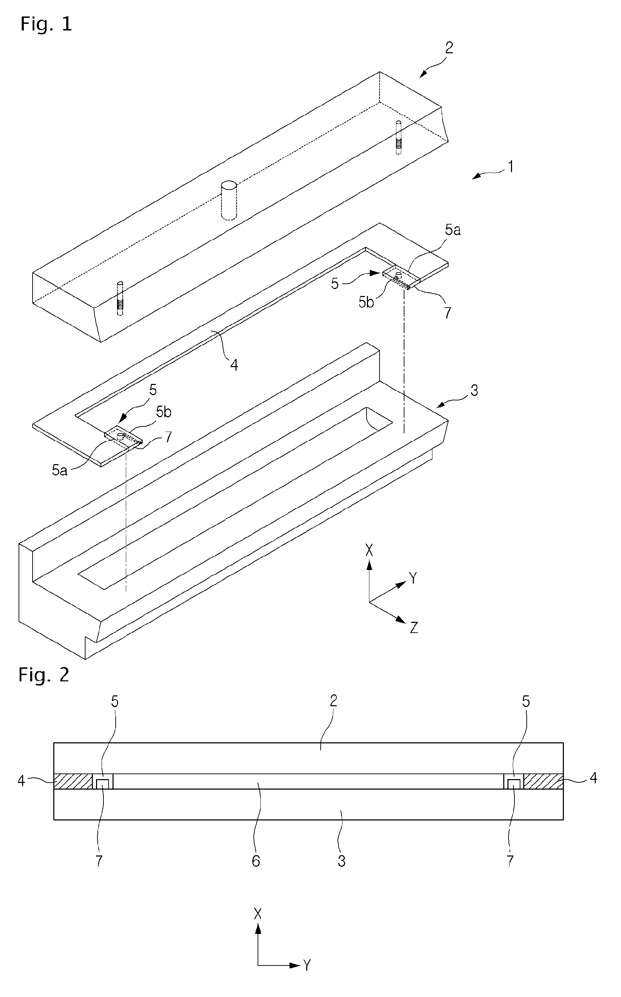

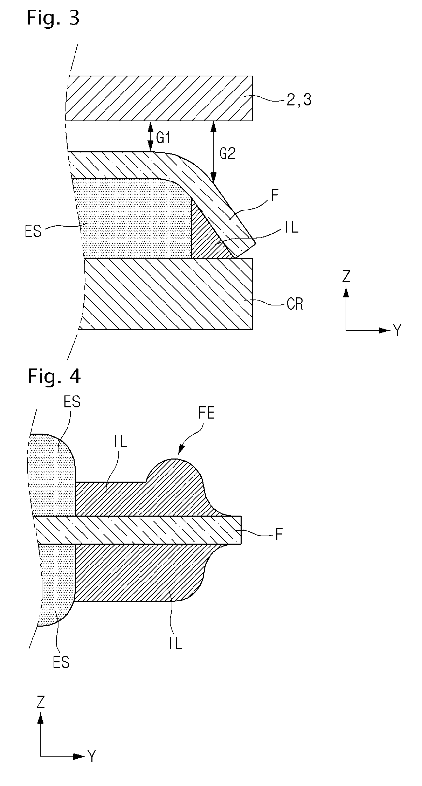

FIG. 1 is an exploded perspective view of a conventional die coater, FIG. 2 is a front view of a conventional die coater, and FIG. 4 is a cross-sectional view of a portion of an electrode obtained by performing a back-coating process using a conventional die coater.

Referring to FIGS. 1 and 2, the conventional die coater 1 has a second coater shim 5 forming a second slit 7 through which insulating liquid is discharged, with the first and second sidewalls 5a,5b extending in parallel with the first direction (Z direction), which is the direction of insulating liquid discharge, having the same length.

When a back-coating process of coating the electrode slurry and insulating liquid on the second side, which is the back side of the current collector, is performed using such a conventional die coater 1, a fat-edge part is generated in the insulating liquid layer (IL), as shown in FIG. 4.

Fat-edge part can cause interference during cell assembly due to their protruding shape, and if the overall application thickness of the insulating liquid is reduced to solve this problem, it can cause safety issues. Therefore, there is a need for technical development of coating facility and coating method that prevent fat-edge part from occurring in the insulating liquid layer during the back-coating process of double-sided electrodes.

(Patent reference 1) Korean Patent Gazette No. 10-2020-0049640

### [Summary]

### [Technical Problem]

A problem that the technical idea of the present disclosure seeks to solve is to provide a die coater, a coating facility including the same, and a coating method that prevents fat-edge part from occurring in the insulating liquid layer during the back-coating process of a double-sided electrode.

### [Technical Solution]

According to one embodiment of the present disclosure, a die coater is provided.

The die coater includes:
a first block with a manifold accommodating an electrode slurry;
   a second block coupled to the first block; and
a coater shim interposed between the first block and the second block, wherein
the coater shim includes:
   a first coater shim forming a first slit through which the electrode slurry is discharged; and a second coater shim forming a second slit through which an insulating liquid is discharged, wherein
   the second coater shim is provided with:
      a pair of first and second sidewalls extending along a first direction, which is the direction of discharge of the insulating liquid, wherein
      with respect to a second direction perpendicular to the first direction, a length L1 of the first sidewall located on an outer side is longer than a length L2 of the second sidewall located on an inner side.

In exemplary embodiments, a plane of the second slit is inclined with respect to a plane of the first slit.

In exemplary embodiments, one end of the first sidewall in the first direction protrudes outwardly from front end parts of the first and second blocks.

In exemplary embodiments, one end of the second sidewall in the first direction is located inwardly from front end parts of the first and second blocks.
In exemplary embodiments, a width of the first slit is limited by a width of the second coater shim.

In exemplary embodiments, a height of the first slit corresponds to a height of the first coater shim, and a height of the second slit is less than a height of the second coater shim.

In exemplary embodiments, any among the first block and the second block is provided with an insulating liquid inlet pipe for receiving the insulating liquid.

In exemplary embodiments, the second coater shim is provided with a concave insulating liquid flow path groove having a bottom surface that is open toward the first block.

In exemplary embodiments, the second coater shim is disposed so as to not overlap with the manifold of the first block.

In exemplary embodiments, at a closed end of the insulating liquid flow path groove, an insulating liquid supply hole is disposed, and an open end of the insulating liquid flow path groove forms the second slit.

In exemplary embodiments, one end of the insulating liquid inlet pipe is connected to the insulating liquid supply hole.

In exemplary embodiments, the second coater shim is coupled to and fixed to at least one among the first block and the second block.

In exemplary embodiments, the first coater shim comprises: a base extending along the second direction; and a first guide and second guide protruding and extending from each end of the base, wherein the first guide and the second guide are spaced apart with the manifold located therebetween.

In exemplary embodiments, the first guide and the second guide are spaced apart from each other so as not to cover the manifold.

In exemplary embodiments, a number of the second coater shim is at least two and the second coater shim is disposed such that the second slit is located at an edge of the second direction of the first slit.

According to another exemplary embodiment of the present disclosure, a coating facility is provided. The coating facility includes: a die coater configured to simultaneously discharge an electrode slurry and an insulating liquid; and a coating roller configured to rotate so as to transfer an electrode substrate, wherein
the die coater includes:
a first block with a manifold accommodating the electrode slurry;
a second block coupled to the first block; and
a coater shim interposed between the first block and the second block, wherein
the coater shim includes:
   a first coater shim forming a first slit through which the electrode slurry is discharged; and a second coater shim forming a second slit through which the insulating liquid is discharged, wherein
   the second coater shim is provided with:
      a pair of first and second sidewalls extending along a first direction, which is the direction of discharge of the insulating liquid, wherein
      with respect to a second direction perpendicular to the first direction, a length L1 of the first sidewall located on an outer side is longer than a length L2 of the second sidewall located on an inner side.

According to yet another exemplary embodiment of the present disclosure, an electrode coating method is provided.

The electrode coating method includes: a top-coating process of coating a first side of a current collector with an electrode slurry and an insulating liquid; a back-coating process of coating a second side of a current collector with an electrode slurry and an insulating liquid, wherein the back-coating process utilizes the above-described coating facility.

### [Advantageous Effects]

According to exemplary embodiments of the present disclosure, when back-coating is performed, the coating gap, which is the distance between the front end part of the second coater shim forming the second slit through which the insulating liquid is discharged and the current collector, which is an electrode substrate, is constant along the width direction, so that fat-edge parts do not occur in the insulating liquid layer, and an insulating layer with uniform application thickness can be formed.

The effects that may be obtained with exemplary embodiments of the present disclosure are not limited to those mentioned above, and other effects not mentioned may be clearly derived and understood by one of ordinary skill in the art from the following description.

### [Brief Description of the Drawings]

FIG. 1 is an exploded perspective view of a conventional die coater.
FIG. 2 is a front view of a conventional die coater.
FIG. 3 is a drawing to illustrate a problem with performing a back-coating process using a conventional die coater.
FIG. 4 is a cross-sectional view of a portion of an electrode manufactured by performing a back-coating process using a conventional die coater.
FIG. 5 is a drawing illustrating a back-coating process using a coating facility according to an exemplary embodiment of the present disclosure.
FIG. 6 is an exploded perspective view of a die coater according to an exemplary embodiment of the present disclosure.
FIG. 7 is a front view of the die coater of FIG. 6.
FIG. 8 is a top view of the die coater, looking through the first block of FIG. 6.
FIG. 9 is a top and front view enlarging part "A" of FIG. 8.
FIG. 10 is an enlarged view of the periphery of a second coater shim in a coating facility according to an exemplary embodiment of the present disclosure.
FIG. 11 is a cross-sectional view of a portion of an electrode manufactured by performing a back-coating process using the die coater of the present disclosure.
FIG. 12 is a schematic drawing to illustrate a coating method according to an exemplary embodiment of the present disclosure.
FIG. 13 is an exploded perspective view of a die coater according to an exemplary embodiment of the present disclosure.
FIG. 14 is a front view of the die coater of FIG. 13.

### [Description of Reference Numerals]

1, 10: DIE COATER
100: SECOND BLOCK
110: INSULATING LIQUID INLET PIPE
120: ELECTRODE SLURRY INLET
200: FIRST BLOCK
210: MANIFOLD
300: COATER SHIM
310: FIRST COATER SHIM
320: SECOND COATER SHIM
321: FIRST SIDEWALL
322: SECOND SIDEWALL
323: INSULATING LIQUID FLOW PATH GROOVE
410: FIRST SLIT
420: SECOND SLIT

### [Best form for practicing the invention].

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the present disclosure and do not represent all of the technical ideas of the disclosure, and that there may be various equivalents and modifications that may be substituted for them at the time of filing the present disclosure.

Furthermore, in describing the present disclosure, specific descriptions of relevant disclosed configurations or features are omitted where it is believed that such detailed description would obscure the essence of the present disclosure.

Since the embodiments of the present disclosure are provided to more fully illustrate the disclosure to those of ordinary skill in the art, the shapes and sizes of the components in the drawings may be exaggerated, omitted, or shown schematically for clarity. Accordingly, the size or proportion of each component is not necessarily indicative of its actual size or proportion.

As used herein, expressions in the singular include the plural unless the context clearly indicates otherwise.

As used herein, the first direction is defined as the Z direction, which is the discharge direction of the electrode slurry or insulating liquid, and the second direction is defined as the Y direction, which is the width direction of the die coater and is perpendicular to the first direction.

The present disclosure relates to a die coater capable of simultaneously coating two different types of liquids on an electrode substrate of an electrode for a secondary battery, a coating facility including the same, and a coating method.

FIG. 3 is a drawing to illustrate a problem in the case of performing a back-coating process using a die coater. The inventors of the present disclosure have realized that the occurrence of the fat-edge part is caused by the difference between the thickness of the electrode slurry layer (ES) coated on the first side of the current collector (F) after the top-coating process and the thickness of the insulating liquid layer (IL). Referring to FIG. 3, a conventional die coater shows that the coating gap (G1,G2), which is the separation distance from the front end parts of the first and second blocks (2,3) through which the insulating liquid is discharged during back-coating to the current collector (F), is not constant, but varies along the second direction (Y direction). Specifically, the coating gap (G1,G2) is progressively lengthened from the electrode slurry layer (ES) toward the insulating liquid layer (IL). When the back-coating process is performed in such a state, a fat-edge part (FE) with a relatively thick coating thickness is generated on a portion of the insulating liquid layer formed on the second side of the current collector, as shown in FIG. 4.

The die coater according to exemplary embodiments of the present disclosure has a design change from the prior art in the structure of the second coater shim forming the second slit through which the insulating liquid is discharged, in order to prevent a fat-edge part from occurring in the insulating liquid layer during the back-coating process for the manufacture of double-sided electrodes. The inventors of the present disclosure noted that in a double-sided electrode, the fat-edge part does not occur in both the insulating liquid layer on the first side and the insulating liquid layer on the second side, but only in the insulating liquid layer on the second side. After a long period of research, they realized that the cause of the problem was due to the difference in coating gap as described above, and to solve this problem, they changed the design of the second coater shim so that the coating gap is constant during back-coating. In other words, they changed the design of the die coater to compensate for the difference between the thickness of the electrode slurry layer applied to the first side and the thickness of the insulating liquid layer.

### (First embodiment)

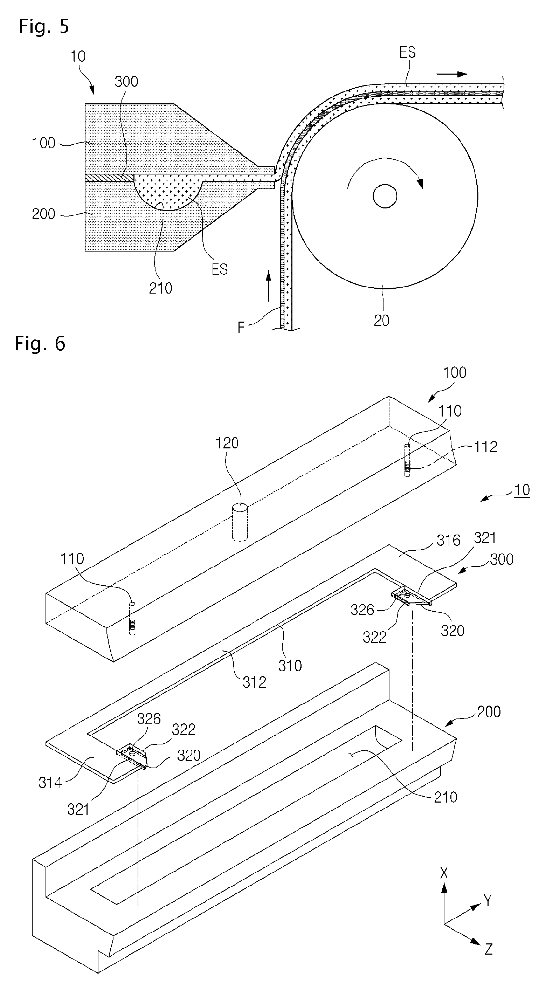

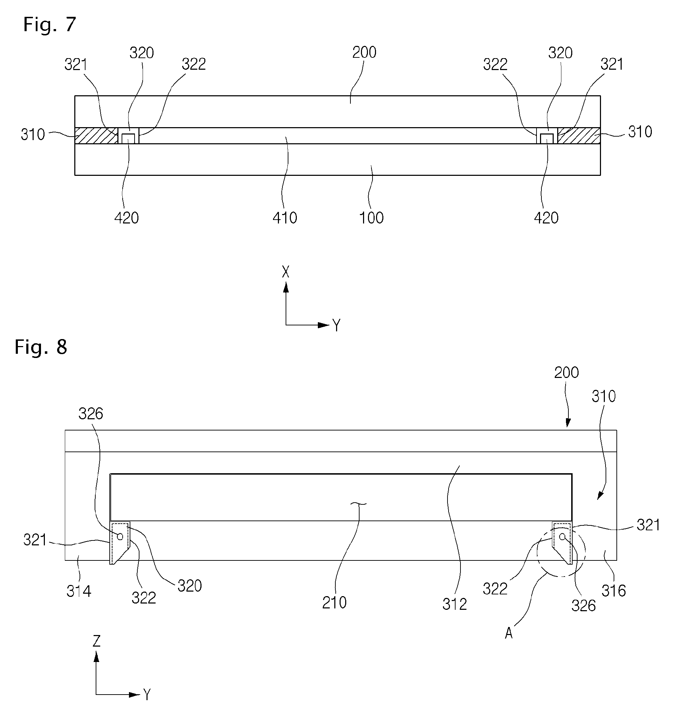

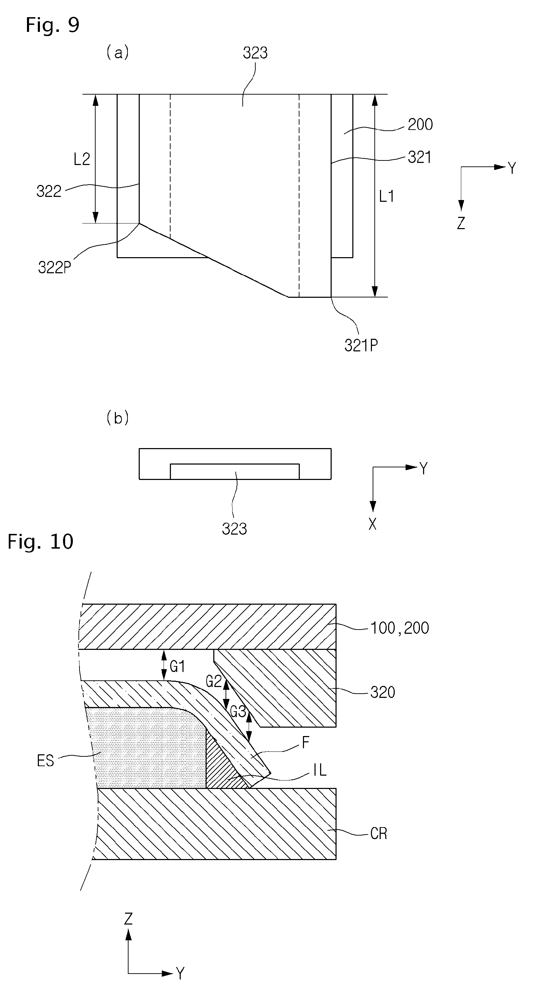

FIG. 5 is a drawing illustrating a back-coating process using a coating facility according to an exemplary embodiment of the present disclosure, FIG. 6 is an exploded perspective view of a die coater according to an exemplary embodiment of the present disclosure, FIG. 7 is a front view of the die coater of FIG. 6, FIG. 8 is a top view of the die coater looking through the first block of FIG. 6, FIG. 9 is a top and front view of an enlarged view of portion "A" of FIG. 8, and FIG. 10 is an enlarged view of the area around a second coater shim in a coating facility according to an exemplary embodiment of the present disclosure.

Referring to FIG. 5, a coating facility according to an exemplary embodiment of the present disclosure includes a die coater 10 and a coating roller 20.

A die coater 10 is configured to simultaneously discharge an electrode slurry ES and an insulating liquid (not shown) onto a current collector F, which is an electrode substrate, and the coating roller 20 is configured to rotate to transfer the electrode substrate in one direction.

Referring to FIGS. 6 through 8, a die coater 10 according to exemplary embodiments includes a first block 200 having a manifold 210 accommodating an electrode slurry; a second block 100 coupled to the first block 200; and a coater shim 300 interposed between the first block 200 and the second block 100.

Here, the coater shim 300 of the present disclosure includes a first coater shim 310 and a second coater shim 320. While the drawings illustrate an embodiment in which the second coater shim 320 is configured to be couplable and detachable to the first coater shim 310, the present disclosure is not limited to this. That is, the first coater shim 310 and the second coater shim 320 may be integral. The first coater shim 310 may form a first slit 410 for discharging electrode slurry accommodated in the manifold 210 of the first block 200, and the second coater shim 320 may form a second slit 420 for discharging insulating liquid supplied through the insulating liquid inlet pipe 110. The second coater shim 320 is disposed such that the second slit 420 is located at an edge of the second direction (Y direction) of the first slit 410. Accordingly, an insulating liquid may be applied to the edge in the second direction of the electrode slurry application part. The number of the second coater shims 320 is determined by the number of rows of insulating liquid to be applied, and may be, for example, one, two or more.

In particular, the die coater 10 of the present disclosure is conventionally designed so that the second coater shim 320 is designed so that the coating gap, which is the distance between the front end part of the second coater shim 320 forming the second slit 420 and the electrode substrate, is constant along the second direction (Y direction), which is the width direction of the die coater, during the back-coating process in order to prevent fat-edge parts from occurring in the insulating liquid layer.

Referring to FIGS. 7 through 9, the second coater shim 320 is provided with a pair of first and second sidewalls 321,322 extending along a first direction (Z direction), which is the discharge direction of the insulating liquid. In the second coater shim 320, the first sidewall 321 is located on the outer side and the second sidewall 322 is located on the inner side, with respect to the second direction (Y direction). A length L1 of the first sidewall 321 is larger than a length L2 of the second sidewall 322.

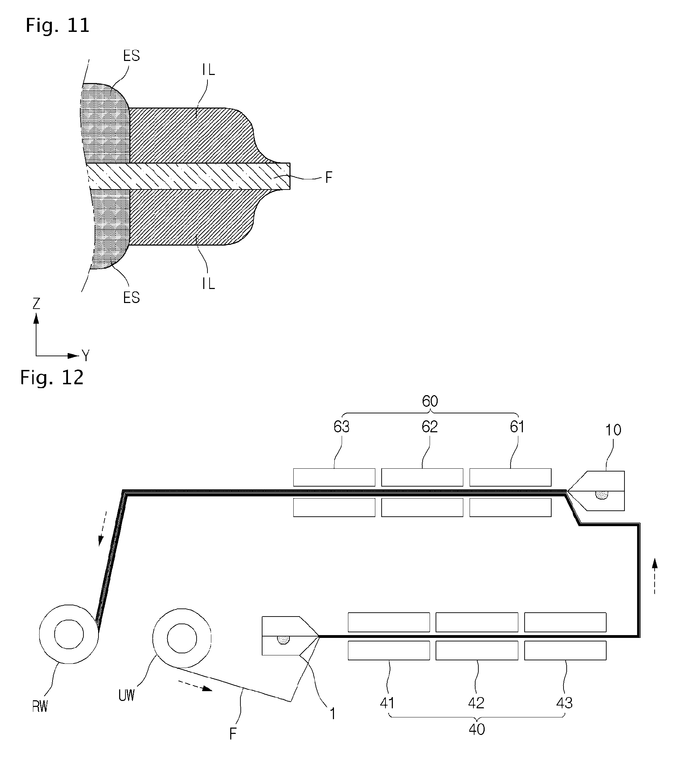

Accordingly, as shown in FIG. 10, even if there is a difference between the thickness of the electrode slurry layer ES coated on the first side of the current collector F and the thickness of the insulating liquid layer IL, the coating gap, which is the distance between the front end part of the second coater shim 320 forming the second slit 420 through which the insulating liquid is discharged and the current collector F, which is the electrode substrate, is constant along the second direction (Y direction). Therefore, when the back-coating process is performed using the die coater 10 of the present disclosure, no fat-edge part occurs in the insulating liquid layer IL applied on both sides, as shown in FIG. 11.

In exemplary embodiments, the first block 200 may be provided with a manifold 210 for accommodating an electrode slurry. The second block 100 coupled to the first block 200 may be provided with an insulating liquid inlet pipe 110 for receiving insulating liquid from an external source. The first block 200 and the second block 100 each occupy approximately half of the body of the die coater 10.

For reference, in FIG. 6, an electrode slurry inlet 120 in communication with a manifold 210 of the first block 200 is shown formed in the second block 100, although the electrode slurry inlet 120 may be formed in the first block 200. Also, in FIG. 6, an insulating liquid inlet pipe 110 for supplying insulating liquid is shown formed in the second block 100, although the insulating liquid inlet pipe 110 may be formed in the first block 200.

The coater shim 300; 310,320 is interposed between the first block 200 and the second block 100 to form a slit at a height suitable for discharging the electrode slurry and insulating liquid. And the coater shim 300; 310,320 restricts the flow direction of these liquids entering the die coater 10 or received in the die coater 10 so that they are discharged toward the slit without flowing backward, and also serve to seal against leakage of the liquids to any part of the die coater 10 other than the slit.

The present disclosure is a coater shim, which includes a first coater shim 310 and a second coater shim 320, the first coater shim 310 and the second coater shim 320 forming a first slit 410 and a second slit 420 separated from each other. Specifically, the first coater shim 310 forms a first slit 410 for discharging electrode slurry accommodated in the manifold 210 of the first block 200, and the second coater shim 320 forms a second slit 420 for discharging insulating liquid supplied through the insulating liquid inlet pipe 110 of the second block 100.

Additionally, the first coater shim 310 and the second coater shim 320 have the same height, and they do not overlap up and down. Thus, the first coater shim 310 and the second coater shim 320 lie in the same plane between the first block 200 and the second block 100. And the first coater shim 310 and the second coater shim 320 are coupled to and fixed to at least one among the first and second blocks 200, 100, respectively. Thus, the first coater shim 310 and the second coater shim 320 are sealed by pressing forces exerted by a fastening of the first block 200 and the second block 100, such as a bolt-fastening (not shown), so that their upper and lower surfaces are pressed against the first block 200 and the second block 100, respectively.

The first coater shim 310 includes a base 312 extending along a second direction (Y direction), and a first guide 314 and a second guide 316 protruding from both ends of the base 312, respectively. Here, the first coater shim 310 forms a first slit 410 in the space between the first and second guides 314, 316. The first guide 314 and the second guide 316 are spaced apart with the manifold 210 in between, and are disposed such that they do not cover the manifold 210. Accordingly, the electrode slurry accommodated in the manifold 210 is discharged to the outside through the first slit 410 formed by the first coater shim 310 and the first and second blocks 200,100.

In exemplary embodiments, the second coater shim 320 is open toward the first block 200 and is provided with a concave, grooved insulating liquid flow path groove 323 with a bottom surface (see (b) in FIG. 9). The second coater shim 320 has an open end of the grooved insulating liquid flow path groove 323 forming a second slit 420. The depth of the insulating liquid flow path groove 323 is less than the thickness (height) of the second coater shim 320, so that eventually, as shown in FIG. 7, the height of the first slit 410 corresponds to the height of the first coater shim 310 and the height of the second slit 420 is formed to be less than the height of the second coater shim 320. Here, "height" is the length in the X-direction. And, since the second coater shim 320 has the insulating liquid flow path groove 323 facing the first block 200, the second slit 420 is defined as the space formed between the insulating liquid flow path groove 323 and the first block 200.

Since the first coater shim 310 and the second coater shim 320 have the same height and lie in the same plane without overlapping up and down, the width of the first slit 410 is limited by the width of the second coater shim 320.

In exemplary embodiments, the first sidewall 321 of the second coater shim 320 may be pressed against the inner walls of the first guide 314 or the second guide 316, respectively. Accordingly, the distance between opposing second sidewalls 322 (opposite sides of the first sidewall) of the paired second coater shims 320 corresponds to the substantial width of the first slit 410. That is, the length of the distance between the inner walls of the first guide 314 and the second guide 316 minus the width of the paired second coater shims 320 is the width of the first slit 410.

In exemplary embodiments, the second coater shim 320 may be disposed such that it does not overlap the manifold 210 of the first block 200. Accordingly, the structure of the second slit 420 formed by the second coater shim 320 is such that it is blocked from the electrode slurry in the first slit 410 by the two sidewalls 321,322 of the second coater shim 320, and furthermore, the top of the insulating liquid flow path groove 323 is closed, and the bottom is pressed against the plane of the first block 200, so that the second coater shim 320 is structurally isolated from the electrode slurry. Thus, the die coater 10 according to the present disclosure is significantly less likely to have two different types of liquids mixing inside it.

In exemplary embodiments, the second coater shim 320 has an insulating liquid supply hole 326 formed through the second coater shim 320, as opposed to the insulating liquid flow path groove 323 having a bottom surface (see FIGS. 6 and 8), and the insulating liquid supply hole 326 may be disposed within the closed end of the insulating liquid flow path groove 323. That is, the insulating liquid supply hole 326 is disposed in the closed end of the insulating liquid flow path groove 323, and the open end of the insulating liquid flow path groove 323 forms the second slit 420. Then, with the second coater shim 320 coupled to the first and second blocks 200 and 100, respectively, one end of the insulating liquid inlet pipe 110 of the second block 100 is connected with the insulating liquid supply hole 326 of the second coater shim 320. Accordingly, the insulating liquid supplied through the insulating liquid inlet pipe 110 flows through the insulating liquid supply hole 326 into the insulating liquid flow path groove 323 on the underside of the second coater shim 320 facing the first block 200, and is then discharged to the outside through the open end of the insulating liquid flow path groove 323 forming the second slit 420.

Referring to FIGS. 7 and (a) of FIG. 9 together, the plane of the second slit 420 does not lie in the same plane as the plane of the first slit, but is inclined, as the length L1 of the first sidewall 321 at a relatively distant position from the first slit 410 is longer than the length L2 of the second sidewall 322 at a relatively close position from the first slit 410.

Therefore, even if there is a difference in the thickness of the electrode slurry layer and the insulating liquid layer applied to the first side of the current collector F, when a back-coating process of applying the electrode slurry and insulating liquid to the second side of the current collector F is performed using the die coater of the present disclosure, as shown in FIG. 10, the distance G3 from the first sidewall 321 forming the second slit 420 to the current collector F and the distance G2 from the second sidewall 322 forming the second slit 420 to the current collector F are at the same or similar levels, which can prevent a fat-edge part from occurring in the insulating layer during the back-coating process.

Referring to FIGS. 9 and 10, the first direction (Z direction) one end 321P of the first sidewall 321 of the second coater shim 320 may protrude outwardly from the front end part of the first and second blocks 200,100. Accordingly, whereas the coating gap of the conventional die coater 1 is determined by the front end part of the first and second blocks, the coating gap of the die coater 10 of the present disclosure is determined by the second coater shim at the area where the insulating liquid is discharged.

Meanwhile, the second sidewall 322 of the second coater shim 320 may have a first direction (Z-direction) one end 322P protruding outwardly from the front end part of the first and second blocks 200,100, or it may be located inwardly. Whether the one end 322P of the second sidewall 322 is positioned inwardly or outwardly of the first and second blocks 200,100 may be appropriately selected based on the thickness of the insulating liquid application. Specifically, if the insulating liquid requires a thicker application thickness, it is preferred that the one end 322P of the second sidewall 322 be located on the inner side of the first and second blocks 200,100, and conversely, if the insulating liquid requires a thinner application thickness, it is preferred that the one end 322P of the second sidewall 322 be located on the outer side of the first and second blocks 200,100.

The angle of the interior angle formed by the imaginary line connecting the one end 321P of the first sidewall 321 and the one end 322P of the second sidewall 322, and the imaginary line extending along the second direction (Y direction), may be the same or similar to the angle of the interior angle formed by the current collector F and the coating roller CR, as shown in FIG. 10.

### (Second embodiment)

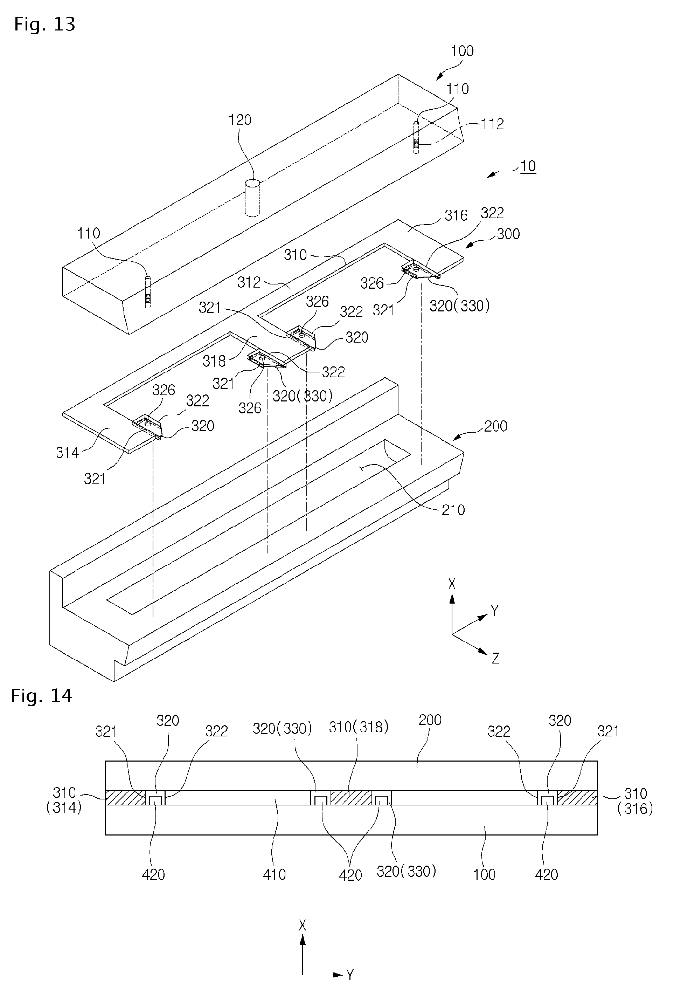

FIG. 13 is an exploded perspective view of a die coater according to an exemplary embodiment of the present disclosure.

FIG. 14 is a front view of the die coater of FIG. 13.

Referring to these drawings, in exemplary embodiments, the first coater shim 310 may further include a third guide 318 disposed between the first guide 314 and the second guide 316, relative to the second direction (Y direction). Here, the first coater shim 310 forms the space between the first guide 314 and the third guide 318 and the space between the third guide 318 and the second guide 316 as first slits 410, respectively. That is, the number of first slits 410 increases as the third guide 318 is added, and the electrode slurry can be applied in two rows.

On each side of the second direction (Y direction) of the third guide 318, an auxiliary shim 330 forming a second slit 420 may be disposed. FIG. 13 illustrates an embodiment in which a second coater shim 320 of the present disclosure is employed as the auxiliary shim, but is not limited thereto. That is, a second coater shim 5 of the shape shown in FIG. 1 may also be employed as the auxiliary shim.

When the electrode slurry application parts are two rows, the coating gap varies along the second direction at the position corresponding to the first and second guides 314,316 during back-coating, but the coating gap may vary or may be constant along the second direction at the position corresponding to the third guide 318. After top-coating, the top-coated side of the electrode is symmetrically disposed with a first electrode slurry application part applied to one side of the third guide 318 in the second direction and a second electrode slurry application part applied to the other side of the third guide 318 in the second direction. Depending on the separation distance in the second direction between the first electrode slurry application part and the second electrode slurry application part, the thickness of the first electrode slurry application part and the thickness of the second electrode slurry application part, and the sliding inclination of the electrode slurry and insulating liquid, the coating gap may be constant or variable. If the coating gap is constant, a conventional second coater shim can be adopted as an auxiliary shim, and if the coating gap changes, the second coater shim of the present disclosure can be adopted as an auxiliary shim.

A method for coating an electrode according to exemplary embodiments of the present disclosure will be described in the following.

A method for coating an electrode according to exemplary embodiments of the present disclosure includes: a top-coating process of coating the first side of a current collector with an electrode slurry and an insulating liquid; a back-coating process of coating the second side of a current collector with an electrode slurry and an insulating liquid, wherein the back-coating process utilizes the above-described coating facility. The die coater and coating facility described above may be utilized only in the back-coating process.

For example, the coating facility includes: a die coater 10 configured to simultaneously discharge an electrode slurry and an insulating liquid; and a coating roller CR configured to rotate to transfer an electrode substrate, wherein the die coater 10 includes a first block 200 having a manifold for accommodating an electrode slurry; a second block 100 coupled to the first block; and a coater shim 300 interposed between the first and second blocks, wherein
the coater shim includes:
a first coater shim 310 forming a first slit 410 through which an electrode slurry is discharged; and at least one second coater shim 320 forming a second slit 420 through which an insulating liquid is discharged, wherein
the second coater shim 320 is provided with:
   a pair of first and second sidewalls extending along a first direction, which is the direction of discharge of the insulating liquid, wherein with respect to a second direction perpendicular to the first direction, a length L1 of the first sidewall located on the outer side is longer than a length L2 of the second sidewall located on the inner side.

In the die coater 10 according to the present disclosure, the design of the second coater shim forming the second slit 420 through which the insulating liquid is discharged is changed as described above considering the difference in thickness between the thickness of the electrode slurry layer applied to the first side (top-coating side) and the thickness of the insulating liquid layer during the back-coating process. As a result, when coating using the coating facility according to the present disclosure during the back-coating process, the coating gap becomes constant along the direction (Y direction) from the electrode slurry layer to the insulating liquid layer, thus preventing the occurrence of a fat-edge part in the insulating liquid layer, where the application thickness is relatively thicker.

The die coater 10 and the coating roller CR have been described in detail previously, so that redundant descriptions will be omitted.

FIG. 12 is a schematic drawing to illustrate a coating method according to an exemplary embodiment of the present disclosure.

Referring to FIG. 12, a current collector F substrate is supplied through an unwinder UW. A top-coating process of coating the electrode slurry and insulating liquid with a die coater 1 is carried out on the first side of the current collector F. Then, the top-coated current collector F is dried through the first heating part 40. The first heating part 40 may include a plurality of drying zones 41, 42, 43. After the top-coating and drying process, the current collector F is subjected to a back-coating process. The electrode slurry and insulating liquid are coated on the second side of the top-coated current collector F using the die coater 10. Then, the back-coated current collector F passes through the second heating part 60. The second heating part 60 may include a plurality of drying zones 61, 62, 63. The electrodes produced by the top-coating and back-coating processes are wound in a rewinder RW.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A die coater comprising:
a first block with a manifold accommodating an electrode slurry;
a second block coupled to the first block; and
a coater shim interposed between the first block and the second block, wherein
the coater shim comprises:
a first coater shim forming a first slit through which the electrode slurry is discharged; and a second coater shim forming a second slit through which an insulating liquid is discharged, wherein
the second coater shim is provided with:
a pair of first and second sidewalls extending along a first direction, which is the direction of discharge of the insulating liquid, wherein
with respect to a second direction perpendicular to the first direction, a length L1 of the first sidewall located on an outer side is longer than a length L2 of the second sidewall located on an inner side.

2. The die coater of claim 1, wherein
a plane of the second slit is inclined with respect to a plane of the first slit.

3. The die coater of claim 1, wherein
one end of the first sidewall in the first direction protrudes outwardly from front end parts of the first and second blocks.

4. The die coater of claim 1, wherein
one end of the second sidewall in the first direction is located inwardly from front end parts of the first and second blocks.

5. The die coater of claim 1, wherein
a width of the first slit is limited by a width of the second coater shim.

6. The die coater of claim 5, wherein
a height of the first slit corresponds to a height of the first coater shim, and
a height of the second slit is less than a height of the second coater shim.

7. The die coater of claim 1, wherein
any among the first block and the second block is provided with an insulating liquid inlet pipe for receiving the insulating liquid.

8. The die coater of claim 1, wherein
the second coater shim is provided with a concave insulating liquid flow path groove having a bottom surface that is open toward the first block.

9. The die coater of claim 8, wherein
the second coater shim is disposed so as to not overlap with the manifold of the first block.

10. The die coater of claim 8, wherein
at a closed end of the insulating liquid flow path groove, an insulating liquid supply hole is disposed, and an open end of the insulating liquid flow path groove forms the second slit.

11. The die coater of claim 10, wherein
one end of the insulating liquid inlet pipe is connected to the insulating liquid supply hole.

12. The die coater of claim 1, wherein
the second coater shim is coupled to and fixed to at least one among the first block and the second block.

13. The die coater of claim 1, wherein
the first coater shim comprises:
a base extending along the second direction; and
a first guide and a second guide protruding and extending from each end of the base, wherein
the first guide and the second guide are spaced apart with the manifold located therebetween.

14. The die coater of claim 13, wherein
the first guide and the second guide are spaced apart from each other so as not to cover the manifold.

15. The die coater of claim 1, wherein
a number of the second coater shim is at least two and the second coater shim is disposed such that the second slit is located at an edge of the second direction of the first slit.

16. A coating facility comprising:
a die coater configured to simultaneously discharge an electrode slurry and an insulating liquid; and
a coating roller configured to rotate so as to transfer an electrode substrate, wherein
the die coater comprises:
a first block with a manifold accommodating the electrode slurry;
a second block coupled to the first block; and
a coater shim interposed between the first block and the second block, wherein the coater shim comprises:
a first coater shim forming a first slit through which the electrode slurry is discharged; and a second coater shim forming a second slit through which the insulating liquid is discharged, wherein
the second coater shim is provided with:
a pair of first and second sidewalls extending along a first direction, which is the direction of discharge of the insulating liquid, wherein
with respect to a second direction perpendicular to the first direction, a length L1 of the first sidewall located on an outer side is longer than a length L2 of the second sidewall located on an inner side.

17. An electrode coating method comprising:
a top-coating process of coating a first side of a current collector with an electrode slurry and an insulating liquid;
a back-coating process of coating a second side of a current collector with an electrode slurry and an insulating liquid, wherein
the back-coating process utilizes a coating facility according to claim 16.
